(19) Europäisches Patentamt

European Patent Office

Office européen des brevets

(11) **EP 0 552 132 B1**

(12) **EUROPÄISCHE PATENTSCHRIFT**

(45) Veröffentlichungstag und Bekanntmachung des Hinweises auf die Patenterteilung:
**15.01.1997 Patentblatt 1997/03**

(51) Int. Cl.$^6$: **B60B 17/00**, B60B 9/26

(21) Anmeldenummer: **93810017.9**

(22) Anmeldetag: **14.01.1993**

(54) **Rad für Schienenfahrzeuge, insbesondere Eisenbahnfahrzeuge**

Wheel for rail-vehicles, in particular railway-vehicles

Roue pour véhicules sur rails, en particulier wagons de chemin de fer

(84) Benannte Vertragsstaaten:
**BE CH DE FR GB IT LI SE**

(30) Priorität: **16.01.1992 CH 113/92**

(43) Veröffentlichungstag der Anmeldung:
**21.07.1993 Patentblatt 1993/29**

(73) Patentinhaber: **SULZER INNOTEC AG**
**CH-8401 Winterthur (CH)**

(72) Erfinder:
• **Franklin, Clifford J.**
**CH-8404 Winterthur (CH)**
• **Yesilalp, Bülent**
**CH-8405 Winterthur (CH)**

(74) Vertreter: **Trieblnig, Adolf**
**c/o Sulzer Management AG**
**KS/Patente/0007**
**8401 Winterthur (CH)**

(56) Entgegenhaltungen:
DE-C- 408 957          US-A- 1 329 111
US-A- 1 369 814        US-A- 1 509 982
US-A- 4 093 299

**Beschreibung**

Die Erfindung betrifft ein Rad für Schienenfahrzeuge entsprechend dem Oberbegriff des Patentanspruchs 1.

Schienenfahrzeuge - Lokomotiven, Güterwagen und dgl. -, welche für hohe Fahrgeschwindigkeiten, insbesondere auch beim Durchfahren von Kurven, ausgelegt sind, erfordern Räder mit in Querrichtung möglichst starr geführten, radial gefederten Radkränzen, da bei derartigen Fahrzeugen, insbesondere beim Befahren von kurvenreichen Strekken, von Weichen und Führungsschienen oder aufgrund von horizontalen Gleisfehlern, über die Radkränze relativ hohe seitliche Kräfte in den Radsatz eingeleitet werden. Dabei sollen Aenderungen des Spurmasses des Radsatzes vermieden werden, welche zu einer Beeinträchtigung des Laufverhaltens führen können.

Ein aus DE-C-408957 bekanntes Rad der eingangs genannten Art weist stangenartige, federnde, sichelförmige Speichen auf, deren parallel zur Achse des Rades gemessene Breite annähernd der halben Breite des Radkranzes entspricht. Die Speichen sind mit ihren nabenseitigen Enden in Umfangsrichtung gegeneinander abgestützt und durch Spannbolzen gemeinsam zwischen zwei von der Nabe radial abstehenden Flanschen gehalten, und mit ihren radkranzseitigen Enden je durch einen gegen den inneren Umfang des Radkranzes verspannbaren Vorschuh zwischen zwei vom Radkranz nach innen abstehenden Flanschen befestigt. Die Speichen weisen je einen im Umfangsbereich der von der Nabe abstehenden Flanschen zusätzlich eingespannten, geraden nabenseitigen Endabschnitt, einen an diesen ausserhalb der Flanschen anschliessenden, mit relativ kleinen Krümmungsradien ausgeführten S-förmigen ersten Bogenabschnitt und einen an diesen anschliessenden, mit einem bedeutend grösseren Krümmungsradius ausgeführten zweiten Bogenabschnitt auf, der flach gekrümmt gegen die Anschlussstelle am Radkranz verläuft. Die speichen der bekannten Ausführung erfordern eine relativ aufwendige Herstellung und weisen auf einem beträchtlichen Teil ihrer Länge eine relativ hohe Steifigkeit auf, wobei im wesentlichen nur die zweiten Bogenabschnitte der Speichen eine Einfederung der Nabe relativ zum Radkranz zulassen. Die Speichen, deren innere Enden in radialen Ebenen um die ganze Nabe herum miteinander in Berührung stehen, sind zudem je mit durch die entsprechenden Abmessungen am Nabenumfang bestimmten, relativ grossen Wandstärken ausgeführt. Die bekannte Ausführung lässt somit nur relativ geringe vertikale Einfederungen der Naben gegenüber dem Radkranz zu.

Ein in der US-A-1,329,111 beschriebenes Rad für Kraftfahrzeuge, welches eine Felge mit einem Reifen aus Vollgummi oder Stahl enthält, ist mit kreisbogenförmig gekrümmten Speichen ausgeführt, durch welche Stösse und Vibrationen absorbiert werden sollen, die üblicherweise durch Luftreifen aufgenommen werden. Die inneren Enden der Speichen sind in radialen Schlitzen einer scheibenförmigen Nabe angeordnet und zwischen zwei scheibenförmigen Platten eingespannt gehalten. Die äusseren Enden der Speichen sind je mit einer an den inneren Umfang der Felge anlegbaren Endpartie ausgeführt und mit der Felge durch zwei diese radial durchsetzende Schrauben verbunden. Die bekannte Ausführung lässt vertikale Einfederungen der Nabe gegenüber der Felge zu, wobei die für die Elastizität dieser Verbindung massgebenden freien Längen der Speichen durch deren Kreisbogenform bestimmt sind. Das bekannte Rad ist jedoch für Schienenfahrzeuge, insbesondere für die Uebertragung der im Bahnbetrieb auftretenden Kräfte, nicht geeignet.

Der Erfindung liegt die Aufgabe zugrunde, ein verbessertes Rad der eingangs genannten Art in einer einfachen Bauweise zu schaffen, welche mit gegenüber bisherigen Ausführungen günstiger beanspruchten Speichenteilen eine erhöhte Elastizität der radialen Verbindung zwischen dem Radkranz und dem Nabenteil und zugleich eine in Querrichtung und in Umfangsrichtung möglichst steife Verbindung zwischen diesen Teilen gewährleistet und welche auch bei rauhem Bahnbetrieb und/oder bei langen Wartungsintervallen eine exakte Führung des in radialer Richtung beweglichen Radkranzes gewährleistet.

Diese Aufgabe wird erfindungsgemäss durch die im kennzeichnenden Teil des Patentanspruchs 1 angegebenen Merkmale gelöst.

Das erfindungsgemäss ausgeführte Rad ist mit einer relativ grossen Anzahl relativ langer, günstig beanspruchter Speichenteile bestückbar, deren Form je entsprechend einem vorgegebenen Verlauf der Biegespannungen in den einzelnen Speichenteilen optimiert werden kann. Entsprechend können die Speichenteile je für relativ geringe Biegespannungen und für eine vorbestimmte, betriebsmässige radiale Einfederung des Radkranzes gegenüber dem Habenteil ausgelegt werden. Dabei sind die Breitenabmessungen und die Wandstärken der Speichenteile innerhalb eines relativ weiten, hauptsächlich konstruktiv bedingten Bereichs frei wählbar. Die erfindungsgemässe Ausführung gestattet ferner die Verwendung eines relativ einfach zu verarbeitenden Werkstoffs, z.B. eines hochlegierten Stahls, für die Speichenteile.

In den abhängigen Patentansprüchen sind vorteilhafte Weiterbildungen des Erfindungsgegenstandes angegeben.

Weitere Einzelheiten und Merkmale ergeben sich aus der folgenden Beschreibung von in der Zeichnung schematisch dargestellten Ausführungsbeispielen nach der Erfindung, in Verbindung mit den Patentansprüchen. Es zeigen:

Fig.1        ein erfindungsgemäss ausgebildetes Rad in einer Seitenansicht;

Fig.2        einen Schnitt durch das Rad entsprechend der Linie II-II in Fig.1;

Fig.3 und 4    Einzelheiten III und IV des Rades nach Fig.1, je in einer grösseren Darstellung;

Fig. 5 und 6    Einzelheiten IV von erfindungsgemäss ausgebildeten Rädern, je in einer abgewandelten Ausführungsform;

Fig. 7 und 8    Einzelheiten III und IV eines erfindungsgemässen Rades nach einer anderen Ausführungsform;

Fig. 9 und 10    Einzelheiten III und IV eines erfindungsgemässen Rades nach einer weiteren Ausführungsform;

Fig. 11    den Schnitt XI - XI aus der Fig. 9, und

Fig. 12    eine Einzelheit eines erfindungsgemässen Rades nach einer weiteren abgewandelten Ausführungsform.

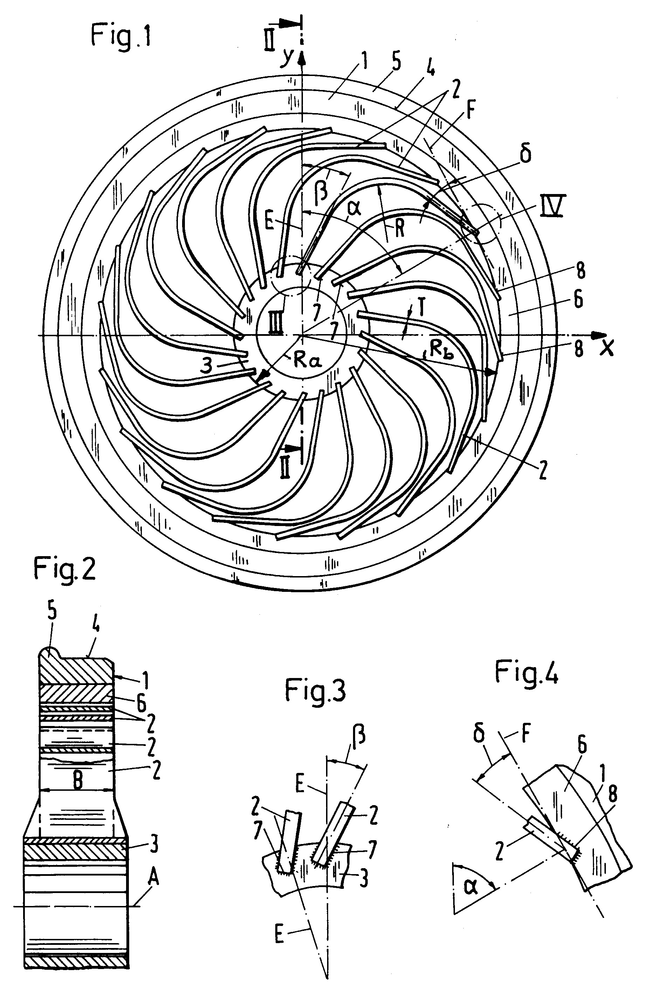

Das in den Figuren 1 und 2 dargestellte Rad eines nicht weiter dargestellten Radsatzes, z.B. eines Triebradsatzes oder eines Laufradsatzes, eines Schienenfahrzeuges enthält einen Radkranz 1, der über in Umfangsrichtung gegeneinander versetzt angeordnete, in Umfangsrichtung gekrümmte Speichenteile 2 mit einem auf einer nicht dargestellten Welle bzw. Achse des Radsatzes drehfest anbringbaren Nabenteil 3 verbunden ist. Nach einer anderen Ausführung kann der Nabenteil 3 auch auf einer entsprechenden Achse drehbar gelagert sein. Der Radkranz 1 ist mit einem Verschleissprofil ausgeführt, welches eine auf eine nicht dargestellte Schiene aufsetzbare Lauffläche 4 enthält und darstellungsgemäss einen diese einseitig begrenzenden Spurkranz 5 aufweisen kann.

Darstellungsgemäss ist der Radkranz 1 durch eine Bandage gebildet, die auf einer Felge 6 drehfest, z.B. mittels einer Schrumpfverbindung, angebracht ist.

Die Speichenteile 2 sind je in Form eines gebogenen Bandes ausgeführt, welches mit parallel zur Achse des Rades verlaufender Breitenerstreckung angeordnet ist und welches sich, ausgehend vom Nabenteil 3, über einen Kreisausschnitt des Rades, dessen Zentriwinkel $\alpha$ mindestens 45°, darstellungsgemäss ca. 60° beträgt, gegen den Radkranz 1 erstreckt. Es sind auch Ausführungen mit einem Zentriwinkel $\alpha$ von mehr als 60° möglich. Die Enden der Speichenteile 2 sind je mit dem Nabenteil 3 und der Felge 6 biege- und verwindungssteif verbunden. Gemäss Fig. 1 sind die Speichenteile 2 je in Form eines einfachen Bogens ausgeführt, der durch einen über das mittlere Drittel seiner Längserstreckung kontinuierlich gekrümmt verlaufenden mittleren Abschnitt und zwei je an diesen anschliessende, im wesentlichen gerade Endabschnitte gebildet ist. In der Fig. 1 ist ein Krümmungsradius R für den mittleren Längenabschnitt eines der Speichenteile 2 angedeutet. Anstelle einer derartig vereinfachten Bogenform mit einem definierten Krümmungsradius kann auch eine entsprechende, hinsichtlich des Spannungsverlaufs in den einzelnen Speichenteilen 2 optimierbare, kontinuierlich gekrümmt verlaufende Bogenform gewählt werden, die z.B. durch ein Polynom höheren Grades darstellbar ist.

Entsprechend der Darstellung nach Fig. 1 sind die Speichenteile 2 so ausgeführt und angeordnet, dass ihre nabenseitigen Endabschnitte je mit einer durch die Anschlussstelle des betreffenden Speichenteils 2 verlaufenden radialen Bezugsebene E des Nabenteils 3 einen inneren Anschlusswinkel $\beta$ einschliessen, der bis ca. 35°, darstellungsgemäss ca. 30° betragen kann, und dass ihre radsatzseitigen Endabschnitte je mit einer durch die entsprechende Anschlussstelle des Speichenteils 2 verlaufenden, zum radsatzseitigen Innenumfang tangentialen Bezugsebene F einen äusseren Anschlusswinkel $\delta$ einschliessen, der 0° bis ca. 30°, darstellungsgemäss ca. 25°, betragen kann. Nach einer Ausführungsform mit für minimale Biegespannungen optimierbaren Speichenteilen 2 ist deren Bogenform durch ein Polynom dritten Grades, entsprechend der folgenden Formel, darstellbar:

$$y = \frac{A}{B^3} \cdot x^3 - \frac{3 \cdot A}{B^2} \cdot x^2 + [\tan(\delta - \alpha) + \frac{3 \cdot A}{B}] \cdot x + R_a$$

wobei

$$A = -R_a + R_b [\cos \alpha - \sin \alpha \cdot \tan(\delta - \alpha)]$$

$$B = R_b \cdot \sin\alpha$$

mit den Definitionen gemäss Fig. 1:

x, y :    Koordinaten der Bogenform des Speichenteils 2
$R_a$ :    Aussenradius des Nabenteils 3

$R_b$ :          Innenradius des Radkranzes (Felge 6)

$\alpha$ :          Zentriwinkel des den Speichenteil 2 enthaltenden Radausschnitts

$\delta$ :          Anschlusswinkel zwischen dem radkranzseitigen Endabschnitt des Speichenteils 2 und der durch dessen Anschlussstelle verlaufenden tangentialen Bezugsebene F.

Entsprechende weitere Bogenformen der Speichenteile 2 können auch z.B. je durch ein Polynom zweiten Grades oder ein Polynom vierten Grades bestimmt sein.

Die nabenseitigen Enden der Speichenteile 2 sind je mittels einer Lötverbindung in einer am Aussenumfang des Nabenteils 3 ausgebildeten, im wesentlichen U-förmigen Aussennut 7 befestigt, welche mit entsprechend dem Anschlusswinkel $\beta$ zur betreffenden radialen Bezugsebene E geneigten seitlichen Flanken ausgeführt ist (Fig. 3). Die radkranzseitigen Enden der Speichenteile 2 sind je mittels einer entsprechenden Lötverbindung in einer am Innenumfang der Felge 6 ausgebildeten, im wesentlichen V-förmigen Innennut 8 befestigt, deren eine Flanke entsprechend dem äusseren Anschlusswinkel $\delta$ zur betreffenden tangentialen Bezugsebene F geneigt ist und mit der anderen Flanke einen rechten Winkel einschliesst (Fig. 4).

Die Speichenteile 2 können je mit über ihre Längserstreckung unterschiedlichen Dickenabmessungen oder, wie dargestellt, mit konstanter Dicke ausgeführt sein. Ebenso können sie mit über ihre Längserstreckung unterschiedlichen Breitenabmessungen oder mit über einen Teil, gemäss Fig. 2 über den grössten Teil, ihrer Längserstreckung konstanter Breite B ausgeführt sein, welche zumindest im radkranzseitigen Endabschnitt zumindest annähernd der Breite des Radkranzes 1 bzw. der Felge 6 entspricht. Die Speichenteile 2 können ferner mit über ihre Breitenerstreckung unterschiedlichen Dickenabmessungen, z.B. mit ellipsenförmigem Querschnitt, oder gemäss Fig. 2 mit über die Breitenerstreckung konstanter Dicke ausgeführt sein.

Bei der dargestellten Ausführung können mit Speichenteilen 2, deren Dicke T ca. 8 mm bis 11 mm beträgt, radiale Einfederungen des Radkranzes 1 gegenüber dem Nabenteil 3 von ca. 4 mm bis 6 mm bei in axialer Richtung weitgehend starr geführtem Radkranz 1 erzielt werden. Als Werkstoff für die Speichenteile 2 kann ein hochlegierter Stahl oder gegebenenfalls ein niedriglegierter Stahl, verwendet werden, wobei darauf zu achten ist, dass die Speichenteile 1 und die daran anschliessenden Teile 3 und 6 des Radkörpers gleiche Wärmeausdehnungskoeffizienten aufweisen. Die zu verlötenden Speichenteile 2 können geschmiedet oder gebogen und spanabhebend bearbeitet werden. Ferner können die nabenseitigen Endabschnitte der Speichenteile 2 auch je im wesentlichen radial, d.h. unter einem Winkel $\beta = 0°$, an den Nabenteil 3 angeschlossen sein.

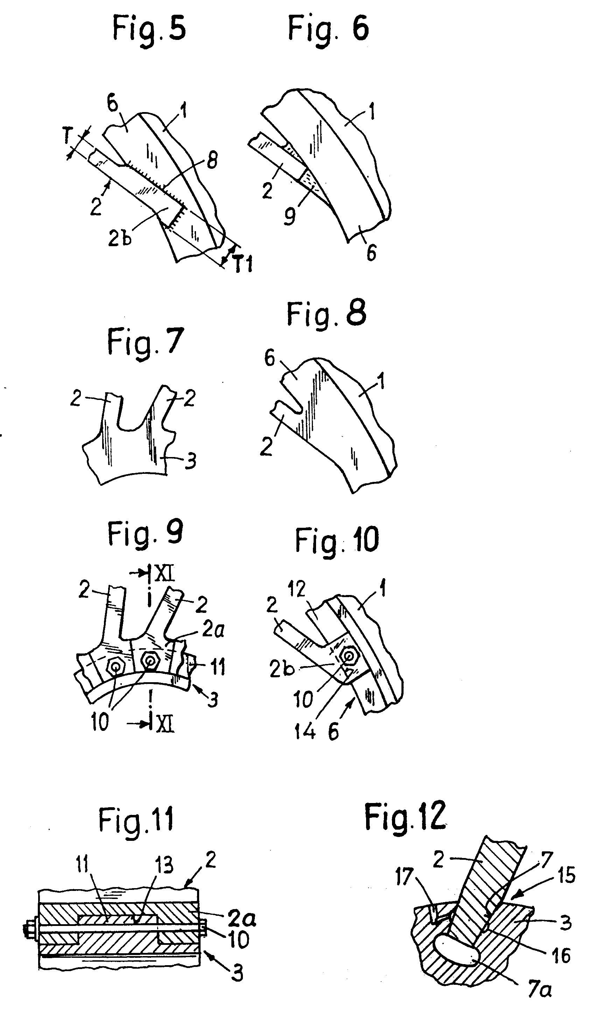

Gemäss Fig. 5 können die Speichenteile 2 je mit einer verdickten Anschlusspartie 2b ausgeführt sein, welche in die mit einer entsprechenden Breite T1 ausgeführte Innennut 8 der Felge 6 eingelötet wird, wodurch der Kraftfluss zwischen den speichenteilen 2 und der Felge 6 verbessert werden kann. Entsprechende Anschlusspartien 2a können auch an den nabenseitigen Enden der Speichenteile 2 vorgesehen sein.

Entsprechend der Darstellung nach Fig. 6 können die Speichenteile 2 auch durch eine entsprechende Schweissverbindung 9 an der Felge 6 bzw. an nicht dargestellten Nabenteil 3 befestigt sein.

Wie aus den Fig. 7 und 8 hervorgeht, können der Nabenteil 3, die Speichenteile 2 und die Felge 6 auch durch einen einstückigen Bauteil gebildet sein, der z.B. durch Erodieren oder Sintern hergestellt werden kann.

Entsprechend der Darstellung nach den Fig. 9, 10 und 11 können die Speichenteile 2 auch je durch eine lösbare mechanische Verbindung, darstellungsgemäss eine Schraubverbindung 10, am Nabenteil 3 und an der Felge 6 biege- und verwindungssteif befestigt sein. Gemäss Fig. 11 können der Nabenteil 3 und die Felge 6 je mit einem radial nach aussen bzw. nach innen vorstehenden Führungsring 11 bzw. 12 ausgeführt sein, an den die mit entsprechenden Führungsnuten 13 bzw. 14 ausgebildeten Anschlusspartien 2a bzw. 2b der Speichenteile 2 je mittels der Schraubverbindung 10 befestigt werden können.

Die Enden der Speichenteile 2 können auch je durch eine andere lösbare mechanische Verbindung, gemäss Fig. 12 mittels einer Schrumpfverbindung 15, in der sie aufnehmenden Aussennut 7 des Nabenteils 3 bzw. in einer entsprechend ausgebildeten Innennut der Felge 6 gehalten sein. Die Enden der Speichenteile 2 und die sie aufnehmenden Nuten sind je mit gegen den Grund der Nut, gemäss Fig. 12 der Aussennut 7, konvergierenden Flanken ausgeführt, deren Neigungswinkel so gewählt sein können, dass die Enden der Speichenteile 2 je selbsthemmend zwischen den Flanken der betreffenden Nut gehalten sind. In den Flanken der Aussennuten 7 sowie in den entsprechenden Flanken der Innennuten 8 können Oelkanäle 16 vorgesehen sein, welche je über einen Verbindungskanal 17 an eine nicht dargestellte Zuführleitung für Druckoel anschliessbar sind. Durch Druckoelzufuhr in die Oelkanäle 16 kann jeweils die Schrumpfverbindung gelöst werden. Entsprechend der Darstellung nach Fig. 12 können die Aussennuten 7 je mit einer an den Abschnitt mit den konvergierenden Flanken anschliessenden, die Nut gegenüber diesem Abschnitt erweiternden Grundpartie 7a ausgeführt sein, durch welche das Ende des betreffenden Speichenteils 2 freigestellt und eine elastische Verformung der die Flanken der Aussennut 7 enthaltenden Partien des Nabenteils 3 beim Schrumpfvorgang erleichtert wird. Es versteht sich, dass auch die in der Felge 6 angeordneten Innennuten mit entsprechenden Grundpartien ausgeführt sein können.

Anstelle der dargestellten Ausführungen mit Felgen 6 ist auch eine Ausführung möglich, bei der die Speichenteile 2 unmittelbar am Radkranz 1 befestigt sind.

**Patentansprüche**

1. Rad für Schienenfahrzeuge, mit einem Radkranz (1), einem Nabenteil (3) und mehreren, in Umfangsrichtung gekrümmten Speichenteilen (2), welche je über einen gegen die Achse des Rades auslaufenden Endabschnitt mit dem Nabenteil (3), und über einen gegen den Innenumfang des Radkranzes (1) verlaufenden Endabschnitt an einer gegenüber der Anschlussstelle am Nabenteil (3) in Umfangsrichtung versetzten Anschlussstelle mit dem Radkranz (1) verbunden sind dadurch gekennzeichnet, dass die Speichenteile (2) je als bandartiges Tragelement in Form eines einfachen Bogens ausgeführt sind, welcher einen einzigen, über das mittlere Drittel der Länge des Speichenteils (2) kontinuierlich gekrümmt verlaufenden, mittleren Bogenabschnitt aufweist und über den Rest der Länge des Speichenteils (2) im wesentlichen gerade verläuft.

2. Rad nach Anspruch 1, dadurch gekennzeichnet, dass die nabenseitigen Enden der Speichenteile (2) je für sich mit dem Nabenteil (3) biege- und verwindungssteif verbunden sind.

3. Rad nach einem der vorangehenden Ansprüche, dadurch gekennzeichnet, dass die Speichenteile je zumindest im radkranzseitigen Endabschnitt mit einer Breite (B) ausgeführt sind, welche zumindest annähernd der Breite des Radkranzes (1) entspricht.

4. Rad nach einem der vorangehenden Ansprüche, dadurch gekennzeichnet, dass sich die Speichenteile (2), ausgehend vom Nabenteil (3), je über einen Kreisausschnitt des Rades erstrecken, dessen Zentriwinkel ($\alpha$) mindestens 45°, z.B. ca. 60°, beträgt.

5. Rad nach einem der vorangehenden Ansprüche, dadurch gekennzeichnet, dass die Speichenteile (2) je in einer am Aussenumfang des Nabenteils (3) ausgebildeten, parallel zur Achse des Rades verlaufenden Aussennut (7) und in einer an einem radkranzseitigen Innenumfang des Rades ausgebildeten, entsprechend verlaufenden Innennut (8) biege- und verwindungssteif, z.B. mittels einer Schrumpf-, Schweiss- oder Lötverbindung, befestigt sind.

6. Rad nach Anspruch 5, dadurch gekennzeichnet, dass die Aussennuten (7) und/oder die Innennuten (8) je mit einem im wesentlichen U-förmigen Querschnitt ausgeführt sind.

7. Rad nach Anspruch 5, dadurch gekennzeichnet, dass die Innennuten (8) je mit einem im wesentlichen V-förmigen Querschnitt ausgeführt sind.

8. Rad nach einem der Ansprüche 1 bis 4, dadurch gekennzeichnet, dass die Speichenteile (2) am Nabenteil (3) und/oder am radkranzseitigen Innenumfang des Rades biege- und verwindungssteif mittels einer lösbaren mechanischen Verbindung (10) befestigt sind.

9. Rad nach einem der Ansprüche 1 bis 4, dadurch gekennzeichnet, dass der Nabenteil (3), die Speichenteile (2) und der den radkranzseitigen Innenumfang enthaltende Teil des Rades durch einen einstückigen, z.B. durch Erodieren hergestellten, Bauteil gebildet sind.

10. Rad nach einem der vorangehenden Ansprüche, dadurch gekennzeichnet, dass die nabenseitigen Endabschnitte der Speichenteile (2) je mit einer durch die Anschlussstelle des betreffenden Speichenteils (2) verlaufenden radialen Bezugsebene (E) des Nabenteils (3) einen inneren Anschlusswinkel ($\beta$) einschliessen, der 0° bis ca. 35° beträgt, und dass die radkranzseitigen Endabschnitte der Speichenteile (2) je mit einer durch die Anschlussstelle des betreffenden Speichenteils (2) verlaufenden, zum radkranzseitigen Innenumfang tangentialen Bezugsebene (F) einen äusseren Anschlusswinkel ($\delta$) einschliessen, der 0° bis ca. 30° beträgt.

11. Rad nach einem der vorangehenden Ansprüche, dadurch gekennzeichnet, dass die radkranzseitigen Enden der Speichenteile (2) mit einer vom Radkranz (1) trennbaren Felge (6) verbunden sind und dass der Radkranz (1) durch eine auf der Felge (6) lösbar, z.B. mittels einer Schrumpfverbindung, befestigbare Bandage gebildet ist.

12. Rad nach einem der vorangehenden Ansprüche, dadurch gekennzeichnet, dass die Speichenteile (2) je mit einer Bogenform ausgeführt sind, die durch ein Polynom höheren Grades darstellbar ist.

13. Rad nach Anspruch 12, dadurch gekennzeichnet, dass die Bogenform durch ein Polynom dritten Grades, entsprechend der folgenden Formel bestimmt ist:

$$y = \frac{A}{B^3} \cdot x^3 - \frac{3 \cdot A}{B^2} \cdot x^2 + [\tan(\delta-\alpha) + \frac{3 \cdot}{B}] \cdot x + R_a$$

wobei

$$A = -R_a + R_b [\cos \alpha - \sin\alpha \cdot \tan(\delta-\alpha)]$$

$$B = R_b \cdot \sin\alpha$$

mit den Definitionen:

x, y :          Koordinaten der Bogenform des Speichenteils 2
$R_a$ :         Aussenradius des Nabenteils 3
$R_b$ :         Innenradius des Radkranzes (Folge 6)
$\alpha$ :          Zentriwinkel des den Speichenteil 2 enthaltenden Radausschnitts
$\delta$ :          Anschlusswinkel zwischen dem radkranzseitigen Endabschnitt des Speichenteils 2 und der durch dessen Anschlussstelle verlaufenden tangentialen Bezugsebene F.

**14.** Radsatz eines Schienenfahrzeuges mit einem Rad nach einem der vorangehenden Ansprüche.

**Claims**

**1.** Wheel for railway vehicles comprising a wheel rim (1), a hub part (3) and a plurality of spoke parts (2) which are curved in the circumferential direction and which are each connected to the hub part (3) via an end portion running out towards the axis of the wheel and to the wheel rim (1) via an end portion which extends towards to the inner periphery of the wheel rim (1) at a connection position which is displaced in the circumferential direction relative to the connection position at the hub part (3), characterised in that the spoke parts (2) are each executed as a band-like load-carrying element in the form of a single arc which has a single central arc portion which extends continuously curved over the middle third of the length of the spoke part (2) and which extends substantially straight over the rest of the length of the spoke part (2).

**2.** Wheel in accordance with claim 1, characterised in that the hub ends of the spoke parts (2) are each connected to the hub part (3) in a manner which is stiff in bending and in torsion.

**3.** Wheel in accordance with one of the preceding claims, characterised in that the spoke parts are each made with a width (B), at least in the wheel rim end portion, which corresponds, at least approximately, to the width of the wheel rim (1).

**4.** Wheel in accordance with one of the preceding claims, characterised in that the spoke parts (2), starting from the hub part (3), each extend over a circular sector of the wheel whose central angle ($\alpha$) amounts to at least 45°, for example to ca. 60°.

**5.** Wheel in accordance with one of the preceding claims, characterised in that the spoke parts (2) are each secured in a manner which is stiff in bending and in torsion, for example by means of a shrunk connection, a welded connection or a brazed connection in an outer groove (7) extending parallel to the axis of the wheel and formed at the outer periphery of the hub part (3) and in an inner groove (8) extending in a corresponding manner and formed at an inner periphery of the wheel at the rim.

**6.** Wheel in accordance with claim 5, characterised in that the outer groove (7) and/or the inner grooves (8) are each executed with a substantially U-shaped cross-section.

**7.** Wheel in accordance with claim 5, characterised in that the inner grooves (8) are each executed with a substantially V-shaped cross-section.

**8.** Wheel in accordance with one of the claims 1 to 4, characterised in that the spoke parts (2) are secured to the hub part (3) and/or to the inner periphery of the wheel at the rim side in a manner stiff in bending and in torsion by means of a releasable mechanical connection (10).

9. Wheel in accordance with one of the claims 1 to 4, characterised in that the hub part (3), the spoke parts (2) and the part of the wheel containing the inner periphery of the rim are formed by a one-piece component manufactured, for example by erosion.

10. Wheel in accordance with one of the preceding claims, characterised in that the hub end portions of the spoke parts (2) each include an inner connection angle ($\beta$) which amounts to 0° to ca. 35° with a radial plane (E) extending through the connection position of the relevant spoke part (2); and in that the rim end portions of the spoke parts (2) each include an outer connection angle ($\delta$) which amounts to 0° to ca. 30° with a reference plane (F) which extends through the connection position of the relevant spoke part (2) and is tangential to the inner periphery at the rim side.

11. Wheel in accordance with one of the preceding claims, characterised in that the ends of the spoke parts (2) at the rim are connected to a rim seat (6) which can be separated from the wheel rim (1); and in that the wheel rim (1) is formed by a tyre which is releasably securable to the rim seat (6), for example by means of a shrunk connection.

12. Wheel in accordance with one of the preceding claims, characterised in that the spoke parts (2) are each executed with an arcuate shape which can be represented by a polynomial of higher degree.

13. Wheel in accordance with claim 12, characterised in that the arc shape is determined by a polynomial of the third degree in accordance with the following formula:

$$y = \frac{A}{B^3} \cdot x^3 - \frac{3 \cdot A}{B^2} \cdot x^2 + [\tan(\delta-\alpha) + \frac{3 \cdot A}{B}] \cdot x + R_a$$

wherein

$$A = -R_a + R_b [\cos\alpha - \sin\alpha \cdot \tan(\delta-\alpha)]$$

$$B = R_b \cdot \sin\alpha$$

with the definitions:

$x, y$ :     coordinates of the arc shape of the spoke part 2
$R_a$ :     outer radius of the hub part 3
$R_b$ :     inner radius of the wheel rim (rim 6)
$\alpha$ :     central angle of the wheel sector containing the spoke part 2
$\delta$ :     connection angle between the end portion of the spoke part 2 at the rim side and the tangential reference plane F extending through its connection location.

14. Wheel set for a railway vehicle with a wheel in accordance with one of the preceding claims.

**Revendications**

1. Roue pour des véhicules sur rail, avec une couronne de Jante (1), une partie de moyeu (3) et plusieurs parties de rayon (2) courbées dans la direction périphérique qui sont reliées respectivement par un tronçon d'extrémité se terminant contre l'essieu de la roue à la partie de moyeu (3), et par un tronçon d'extrémité s'étendant contre le pourtour intérieur de la couronne de jante (1) à un point de raccordement décalé par rapport au point de raccordement à la partie de moyeu (3) dans la direction de pourtour à la couronne de jante (1), caractérisée en ce que les parties de rayon (2) sont réalisées respectivement comme élément porteur formant bande sous la forme d'un arc simple qui présente un tronçon d'arc central unique s'étendant suivant une courbure continue sur le tiers médian de la longueur de la partie de rayon (2) et qui s'étend d'une manière sensiblement rectiligne sur le reste de la longueur de la partie de rayon (2).

2. Roue selon la revendication 1, caractérisée en ce que les extrémités côté moyeu des parties de rayon (2) sont reliées individuellement à la partie de moyeu (3) de façon rigide en flexion et en torsion.

3. Roue selon l'une des revendications précédentes, caractérisée en ce que les parties de rayon sont réalisées respectivement au moins dans le tronçon d'extrémité côté couronne de jante en une largeur (B) qui correspond au moins approximativement à la largeur de la couronne de jante (1).

4. Roue selon l'une des revendications précédentes, caractérisée en ce que les parties de rayon (2), en partant de la partie de moyeu (3), s'étendent respectivement sur un secteur de cercle de la roue dont l'angle de centrage ($\alpha$) est au moins de 45°, par exemple d'environ 60°.

5. Roue selon l'une des revendications précédentes, caractérisée en ce que les parties de rayon (2) sont fixées respectivement dans une rainure extérieure (7) ménagée dans le pourtour extérieur de la partie de moyeu (3), s'étendant parallèlement à l'essieu de la roue et dans une rainure intérieure (8) ménagée dans un pourtour intérieur de la roue côté couronne de jante de façon rigide en flexion et en torsion, par exemple au moyen d'un assemblage par rétraction, par soudage ou brasage.

6. Roue selon la revendication 5, caractérisée en ce que les rainures extérieures (7) et/ou les rainures intérieures (8) sont réalisées respectivement en une section transversale essentiellement en forme de U.

7. Roue selon la revendication 5, caractérisée en ce que les rainures intérieures (8) sont réalisées respectivement en une section transversale essentiellement en forme de V.

8. Roue selon l'une des revendications 1 à 4, caractérisée en ce que les parties de rayon (2) sont fixées à la partie de moyeu (3) et/ou au pourtour intérieur côté couronne de jante de la roue de façon rigide en flexion et en torsion au moyen d'un assemblage mécanique (10) amovible.

9. Roue selon l'une des revendications 1 à 4, caractérisée en ce que la partie de moyeu (3), les parties de rayon (2) et la partie de la roue contenant le pourtour intérieur côté couronne de jante sont formées par un composant en une pièce fabriquée par exemple par erosion.

10. Roue selon l'une des revendications précédentes, caractérisée en ce que les tronçons d'extrémité côté moyeu des parties de rayon (2) forment respectivement avec un plan de référence radial (E) de la partie de moyeu (3) s'étendant à travers le point de raccordement de la partie de rayon concernée (2) un angle d'assemblage intérieur ($\beta$) qui est de 0° à environ 35°, et en ce que les tronçons d'extrémité côté couronne de jante des parties de rayon (2) forment respectivement avec un plan de référence (F) s'étendant à travers le point de raccordement de la partie de rayon correspondante (2), tangentiel au pourtour intérieur côté couronne de jante, un angle d'assemblage extérieur ($\delta$) qui est de 0° à environ 30°.

11. Roue selon l'une des revendications précédentes, caractérisée en ce que les extrémités côté couronne de jante des parties de rayon (2) sont reliées à une jante (6) pouvant être séparée de la couronne de jante (1), et en ce que la couronne de jante (1) est formée par un bandage fixé amoviblement sur la jante (6), par exemple au moyen d'un assemblage par rétraction.

12. Roue selon l'une des revendications précédentes, caractérisée en ce que les parties de rayon (2) sont réalisées respectivement suivant une forme d'arc pouvant être représentée par un polynôme d'un degré plus élevé.

13. Roue selon la revendication 12, caractérisée en ce que la forme d'arc est définie par un polynôme de troisième degré, conformément à la formule suivante :

$$y = \frac{A}{B^3} \cdot x^3 - \frac{3 \cdot A}{B^2} \cdot x^2 + [\tan(\delta-\alpha) + \frac{3 \cdot A}{B}] \cdot x + R_a$$

où

$$A = -R_a + R_b [\cos\alpha - \sin\alpha \cdot \tan(\delta-\alpha)]$$

$$B = R_b \cdot \sin\alpha$$

avec les définitions :

x, y :        Coordonnées de la forme d'arc de la partie de rayon 2

$R_a$ :        Rayon extérieur de la partie de moyeu 3

$R_b$ :        Rayon intérieur de la couronne de jante (jante 6)

α :        Angle de centrage de la section de roue contenant la partie de rayon 2

δ :        Angle d'assemblage entre le tronçon d'extrémité côté couronne de jante de la partie de rayon 2 et le plan de référence tangentiel F s'étendant à travers le point d'assemblage de celle-ci.

14. Paire de roues d'un véhicule sur rails comportant une roue selon l'une des revendications précédentes.

Fig.1

Fig.2

Fig.3

Fig.4

# Fig. 5

# Fig. 6

# Fig. 7

# Fig. 8

# Fig. 9

# Fig. 10

# Fig. 11

# Fig. 12